# EUROPÄISCHE PATENTSCHRIFT

(11) **EP 1 433 559 B1**
(45) Veröffentlichungstag und Bekanntmachung des Hinweises auf die Patenterteilung: **09.08.2006**
(21) Anmeldenummer: 03025011.2
(22) Anmeldetag: 30.10.2003
(51) Int. Cl.: B23K 1/00

(54) **Verfahren zum Fügen von Werkstücken aus Titanaluminid mittels eines Laser-Lötverfahrens**
Laser brazing method for workpieces made of titanium aluminide
Méthode de brasage par laser pour des pièces d'aluminure de titane

(30) Priorität: 24.12.2002 DE 10261073
(43) Veröffentlichungstag der Anmeldung: 30.06.2004
(73) Patentinhaber: Rolls-Royce Deutschland Ltd & Co KG, 15827 Dahlewitz (DE)
(72) Erfinder: Schreiber, Karl, 15806 Mellense (DE); Jakobi, Günther, 15834 Rangsdorf (DE)
(74) Vertreter: Weber, Joachim

(56) Entgegenhaltungen:
- EP-A- 0 904 881
- US-A- 5 318 214
- US-A- 5 340 015
- US-A- 5 407 119
- PATENT ABSTRACTS OF JAPAN Bd. 010, Nr. 273 (M-518), 17. September 1986 (1986-09-17) & JP 61 095769 A (TOSHIBA CORP), 14. Mai 1986 (1986-05-14)

## Beschreibung

Die Erfindung bezieht sich auf ein Verfahren zum Fügen von Werkstücken aus Titanaluminid mittels eines Lötverfahrens.

Werkstücke aus Titanaluminiden (TiAl) sind insbesondere auf dem Gebiet der Luftfahrtechnik bekannt. Beispielsweise werden Turbinenschaufeln, Lager, Gehäuseteile und ähnliches aus diesen Werkstoffen gefertigt.

Ein Fügeverfahren für derartige Werkstücke zeigt beispielsweise das US-Patent 5,318,214. Dort erfolgt das Fügen der TiAl-Werkstücke mittels eines Lotes, welches in einem Ofen zusammen mit den Werkstücken erwärmt wird. Hierbei erweist es sich als nachteilig, dass in dem Ofen (beispielsweise Vakuumofen oder Schutzgasofen) das Fügen nur unter hohem apparativem Aufwand vorgenommen werden kann, da die Werkstücke entsprechend zueinander positioniert und gegeneinander gepreßt werden müssen. Kommerziell ist ein derartiges Verfahren deshalb nicht anwendbar. Als weiterer Nachteil ergibt sich die thermische Beeinflussung der Werkstücke, die zu unerwünschten Gefügeveränderungen führen kann. Außerdem kommt es zu unerwünschten Verwerfungen, insbesondere beim Fügen von dünnwandigen Blechen.

Das US-Patent 5,785,775 zeigt ein Elektro-Schweißverfahren für Werkstücke aus Titanaluminiden. Hierbei können sich jedoch Risse in der Schweißnaht ergeben, die mittels weiterer, aufwendiger Verarbeitungsschritte beseitigt werden müssen (siehe US 5,873,703 A).

Ein Laserschweißverfahren für Werkstücke aus Titanaluminiden unter Schutzgas beschreibt die US 4,990,741 A. Auch dieses Verfahren ist sehr aufwendig und führt zu Gefügebeeinträchtigungen der Werkstücke.

Die EP-A-0 904 881, die als nächstliegenden stand der Technick angesehen ist, beschreibt ein Verbund- oder Auftragsdiffusionslötverfahren von aus Titanaluminid hergestellten Werkstücken, bei welchem zunächst ein homogenes Gemisch von Pulvern hergestellt und mit einem Bindemittel vermischt wird, wobei anschließend die so erhaltene Masse zwischen die zu verbindenden Werkstücke aufgetragen wird. Die gesamte Anordnung wird dann in einem Vakuumofen über einen langen Zeitraum erhitzt. In spezieller Ausgestaltung kann vorgesehen sein, dass das Auftragen der Masse mit einem Strahl mit hoher Energie, wie z.B. einem Laserstrahl, erfolgt. Der eigentliche Lötvorgang wird jedoch nicht mit einem Laserstrahl durchgeführt, sondern in einem Vakuumofen. Hierdurch ergibt sich eine Beeinträchtigung des Gesamtgefüges der zu verbindenden Bauelemente mit den beschriebenen Nachteilen.

Aus den Patent Abstracts of Japan, Bd. 010, Nr. 273 (M-518) ist es vorbekannt, zum Löten eine indirekte Erwärmung mittels eines Laserstrahls vorzunehmen. Dabei wird jedoch nicht das Lötmaterial erwärmt, vielmehr wird eines der Bauelemente mittels des Laserstrahls erhitzt, welches wiederum indirekt das Lotmaterial erwärmt.

Die US-A-5 407 119 beschreibt eine. Vorrichtung zum Löten mittels eines Laserstrahls, wobei auch hier die Randbereiche des Werkstücks erhitzt werden und sich dabei deren Gefüge verändert.

Ein Verfahren zur Aufbringung von Lötmaterial auf eine Oberfläche mittels Plasma-Sprayen zeigt die US-A-5 340 015.

Insgesamt ist somit festzustellen, dass derzeit kein kommerziell anwendbares Verfahren zum Fügen von Werkstücken, insbesondere von Blechen aus Titanaluminiden, verfügbar ist.

Weiterhin ergibt sich bei sämtlichen bekannten Verfahren der Nachteil, dass geometrisch komplexe Werkstücke, insbesondere Blechstrukturteile, während des Fügevorganges unter anhaltender Druckbelastung und unter Einhaltung hoher Toleranzen positioniert werden müssen. Durch die unterschiedliche Wärmeausdehnung der zu fügenden Werkstücke sowie der verwendeten Halterungen und Druckbeaufschlagungsvorrichtungen während des Aufheizvorganges und des eigentlichen Fügeprozesses ist ein hoher apparativer Aufwand erforderlich. Hieraus resultieren sehr erhebliche Fertigungskosten.

Der Erfindung liegt die Aufgabe zugrunde, ein Verfahren der eingangs genannten Art zu schaffen, welches bei einfacher und kostengünstiger Durchführung unter Vermeidung der Nachteile des Standes der Technik hochqualitative Ergebnisse liefert.

Erfindungsgemäß wird die Aufgabe durch die Merkmalskombination des Anspruchs 1 gelöst. Die Unteranspüche zeigen weitere vorteilhafte Ausgestaltungen der Erfindung.

Erfindungsgemäß ist somit vorgesehen, dass bei dem Fügeverfahren von Werkstücken aus Titanaluminiden mittels eines Lotes die Erwärmung des Lotes durch einen Laserstrahl erfolgt.

Das erfindungsgemäße Verfahren zeichnet sich durch eine Reihe erheblicher Vorteile aus.

Durch die Lotaufschmelzung mittels einer Laserquelle bietet sich die Möglichkeit, die Wärmeeinbringung bzw. Energieeinbringung sehr genau zu steuern. Es ist somit möglich, das Lot sehr genau kontrolliert aufzuschmelzen, da beispielsweise die Energie des Laserstrahls, die Form des Laserstrahls sowie dessen Position sehr exakt einstellbar und regelbar sind. Hierdurch wird erfindungsgemäß ermöglicht, das Fügeverfahren ohne Wärmeeintrag bzw. mit einem nur sehr geringen Wärmeeintrag in die zu fügenden Werkstücke durchzuführen. Dies wiederum bringt den Vorteil, dass das Gefüge der Werkstücke nicht in unerwünschter Weise beeinflußt wird. Weiterhin ergeben sich keine Maßabweichungen durch Wärmeausdehnungen der Werkstücke, da praktisch keine thermischen Dehnungen und Schrumpfungen auftreten.

Das erfindungsgemäße Verfahren ist insbesondere zum Fügen von TiAl-Blechen gut geeignet. Dabei erweist es sich als besonders vorteilhaft, dass die Bleche bzw. Werkstücke auch stumpf gefügt werden können. Es kann somit darauf verzichtet werden, Überlappungsstöße oder Ähnliches auszubilden, die bei derartigen Materialien der Werkstücke mit den hohen geometrischen Genauigkeitsanforderungen nur sehr aufwendig und teuer herstellbar sind. Beim Stand der Technik können derartige Überlappungsstöße beispielsweise nur durch superplastisches Verformen bzw. Warmumformen hergestellt werden.

Die Halterungsvorrichtungen oder Spannvorrichtungen für die Werkstücke können sehr einfach ausgebildet sein, da das Fügen bei Raumtemperatur und unter Atmosphärendruck erfolgen kann.

Erfindungsgemäß können die Werkstücke auch mit einem Lötspalt gefügt werden, sodass auf enge Passungen verzichtet werden kann. Kantenversatz und Spalte werden durch das aufschmelzende Lot sicher und problemlos überbrückt. Somit ist eine einfache Stumpf-Stoß-Ausgestaltung zur Fügevorbereitung bei Verwendung des erfindungsgemäßen Verfahrens ausreichend.

Zum Teil können Spalte sogar erwünscht sein, da durch das bessere plastische Verformungsverhalten des Lotes gegenüber dem Grundwerkstoff die auftretenden Schrumpfspannungen bei Abkühlung des Lotes vom Lot aufgefangen werden und somit der spröde Grundwerkstoff vor Mikro- und auch Makrorissen geschützt ist. Dies ersetzt das im Stand der Technik beschriebene, recht aufwendige Vorwärm- und Abkühlregime beim Laserschweißen von TiAl.

Das erfindungsgemäße Verfahren führt zu einer sehr kostengünstigen Herstellung von Strukturen aus TiAl-Werkstücken. Da diese nicht kalt verformbar sind, ist es erfindungsgemäß möglich, auch komplexe Strukturbauteile, insbesondere aus Blechen, einfach und kostengünstig zu fügen.

Da bei Verwendung des erfindungsgemäßen Verfahrens das Lot nur unmittelbar im Bereich der durch den Laserstrahl erwärmten Position aufschmilzt, kann auf aufwendige, hochtemperaturbeständige bzw. zunderbeständige Spezial-Halterungs-Vorrichtungen verzichtet werden. Weiterhin ist es nicht erforderlich, auf die Fügebereiche während des Fügevorgangs Druck auszuüben. Insgesamt wird das Verfahren bei Raumtemperatur und atmosphärischem Druck durchgeführt wobei eine Schutzgasatmosphäre nur lokal im Bereich der Beeinflussung des Lotes durch den Laser vorhanden sein muss.

Erfindungsgemäß wird ein duktiles Lot bzw. ein duktiler Lotwerkstoff verwendet. Dieser kann ggf. auftretende Wärmespannungen bzw. Dehnungsspannungen auffangen bzw. abbauen, sodass die Werkstücke nicht beeinträchtigt werden.

Ein weiterer Vorteil ergibt sich erfindungsgemäß dadurch, dass der Volumen- und Gewichtsanteil des Lotes sehr gering ist und dass keine zusätzlichen Überlappungen, Stöße oder Ähnliches in den Werkstücken ausgebildet werden müssen. Hierdurch resultiert eine erhebliche Gewichtsersparnis im Vergleich zu den aus dem Stand der Technik bekannten Verfahren, wobei zusätzlich ein hoher spezifischer Festigkeitskennwert der Werkstücke nahezu unverändert beibehalten wird.

Im Folgenden wird die Erfindung anhand eines Ausführungsbeispiels in Verbindung mit der Zeichnung beschrieben. Dabei zeigt:
- Fig. 1: eine Ausgestaltung eines Lötaufbaues gemäß dem Stand der Technik, und
- Fig. 2: eine vereinfachte, schematische Darstellung des erfindungsgemäßen Lötverfahrens.

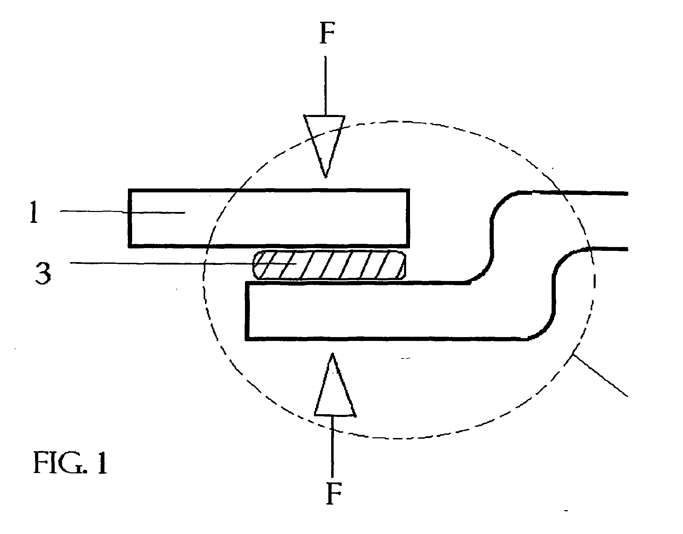

Die Fig. 1 zeigt zwei Werkstücke 1, 2, die mittels eines Lots 3 zu verbinden sind. Dabei sind insbesondere ersichtlich, dass zumindest an einem der Werkstücke ein Überlappungsstoß 6 ausgebildet werden muss. Weiterhin ist durch die Pfeile F schematisch die benötigte Kraftaufbringung mittels einer nicht dargestellten Vorspanneinrichtung dargestellt, um in einer Ofenatmosphäre beim Aufschmelzen des Lotes 3 die beiden Werkstücke 1 und 2 exakt zu fügen.

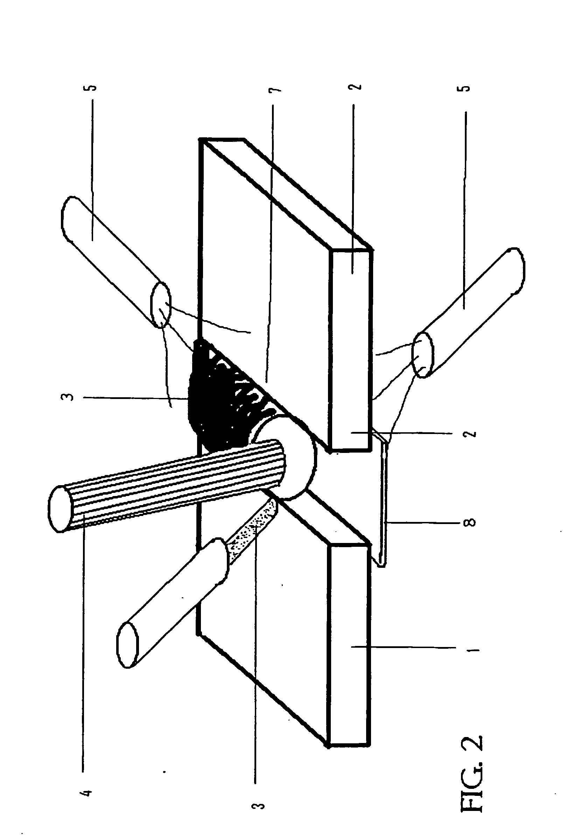

Die Fig. 2 zeigt ein Ausführungsbeispiel, bei welchem die Werkstücke 1, 2 stumpf mittels des Lotes 3 verbunden werden. In schematischer Weise ist ein Laser 4 dargestellt. Zusätzlich ist im Bereich der Erwärmung durch den Laser 4 die Einbringung von Schutzgas 5 dargestellt. Wie sich aus der Darstellung ergibt, erfolgt in einen Randbereich 7 der Werkstücke 1, 2 praktisch keine Wärmeeinbringung. Durch die Wahl eines duktilen Lotes 3 kann sich dieses bei auftretenden Spannungen im Lot während des Fügeverfahrens verformen, so wie dies durch die konvexen Oberflächenbereiche dargestellt ist. Um breite Fügespalte zu realisieren, wird das schmelzflüssige Lot mit Hilfe einer Badsicherung 8 in Form einer Schiene auf der Nahtunterseite vor dem Durchsacken gesichert.

### Bezugszeichenliste

- 1: Werkstück
- 2: Werkstück
- 3: Lot
- 4: Laser
- 5: Schutzgas
- 6: Überlappungsstoß
- 7: Randbereich
- 8: Badsicherung
- F: Kraft

## Patentansprüche

1. Verfahren zum Fügen von Werkstücken (1, 2) aus TiAl mittels eines Lotes (3), wobei
- die Positionierung der Werkstücke (1, 2) zueinander unter Raumtemperatur und unter Atmosphärendruck erfolgt,
- ein duktiles Lot (3) verwendet wird,
- das Lot in Form eines Pulvers zugeführt wird,
- das schmelzförmige Bad durch eine Schiene vor einem Durchsacken gesichert wird,
- das Fügen unter Schutzgas (5) erfolgt,
- das Lot (3) un mittelbar mittels eines Lasers (4) erwärmt wird.

2. Verfahren nach Anspruch 1, **dadurch gekennzeichnet, dass** kein primärer Wärmeeintrag in die Werkstücke (1, 2) erfolgt.

3. Verfahren nach Anspruch 1, **dadurch gekennzeichnet, dass** nur ein geringer Wärmeeintrag in die Werkstücke (1, 2) erfolgt.

4. Verfahren nach einem der Ansprüche 1 bis 3, **dadurch gekennzeichnet, dass** TiAl-Bleche gefügt werden.

5. Verfahren nach einem der Ansprüche 1 bis 4, **dadurch gekennzeichnet, dass** die Werkstücke (1, 2) mit einem Lötspalt gefügt werden.

6. Verfahren nach einem der Ansprüche 1 bis 5, **dadurch gekennzeichnet, dass** die Werkstücke (1, 2) stumpf gefügt werden.

## Claims

1. Method for the joining of components (1, 2) in TiAl by means of a braze (3),
**characterized in that**
- the components (1, 2) are positioned relative to each other at room temperature and under atmospheric pressure,
- a ductile braze (3) is used,
- the braze is fed in powder form,
- the molten bath is protected from sagging by means of a bar,
- joining is accomplished under protective gas (5),
- the braze (3) is directly heated by means of a laser (4).

2. Method in accordance with Claim 1, **characterized in that** there is no primary heat input into the components (1, 2).

3. Method in accordance with Claim 1, **characterized in that** there is only minor heat input into the components (1, 2).

4. Method in accordance with one of the Claims 1 to 3, **characterized in that** TiAl sheets are joined.

5. Method in accordance with one of the Claims 1 to 4, **characterized in that** the components (1, 2) are joined with a braze gap.

6. Method in accordance with one of the Claims 1 to 5, **characterized in that** the components (1, 2) are butt-joined.

## Revendications

1. Procédé d'assemblage de pièces (1, 2) en TiAl au moyen d'un métal d'apport (3), sachant que
- le positionnement des pièces (1, 2), l'une par rapport à l'autre, s'effectue à température ambiante et sous la pression atmosphérique,
- le métal d'apport (3) utilisé est ductile,
- le métal d'apport est amené sous forme de poudre,
- le bain en fusion est assuré contre un décrochage par un rail,
- l'assemblage s'effectue dans une atmosphère protectrice (gaz protecteur 5),
- le métal d'apport (3) est chauffé directement au moyen d'un laser (4).

2. Procédé selon la revendication n° 1, **caractérisé en ce qu** 'il n'y a pas d'apport primaire de chaleur dans les pièces (1, 2).

3. Procédé selon la revendication n° 1, **caractérisé en ce qu** 'il n'y a qu'un apport de chaleur très faible dans les pièces (1, 2).

4. Procédé selon une des revendications n° 1 à 3, **caractérisé en ce que** les tôles à assembler sont en TiAl.

5. Procédé selon une des revendications n° 1 à 4, **caractérisé en ce que** les pièces (1, 2) sont assemblées avec un joint de brasage.

6. Procédé selon une des revendications n° 1 à 5, **caractérisé en ce que** les pièces (1, 2) sont assemblées bout à bout.
